# EUROPÄISCHE PATENTSCHRIFT

(11) **EP 1 175 951 B1**
(45) Veröffentlichungstag und Bekanntmachung des Hinweises auf die Patenterteilung: **20.12.2006**
(21) Anmeldenummer: 01117489.3
(22) Anmeldetag: 19.07.2001
(51) Int. Cl.: B23K 11/00, B23K 11/24, B23K 11/06, B23K 11/25

(54) **Verfahren und Schweissvorrichtung zum Schweissen von Blechüberlappungen**
Method and apparatus for lap seam welding of sheet material
Procédé et appareil pour réaliser des soudures par recouvrement

(30) Priorität: 27.07.2000 CH 14952000
(43) Veröffentlichungstag der Anmeldung: 30.01.2002
(73) Patentinhaber: ELPATRONIC AG, 8962 Bergdietikon (CH)
(72) Erfinder: Müller, Eugen, 8953 Dietikon (CH); Ruscher, Jean-Paul, 67350 Schalkendorf (FR)
(74) Vertreter: Schalch, Rainer

(56) Entgegenhaltungen:
- EP-A- 0 273 984
- US-A- 3 584 178
- US-A- 4 414 455
- US-A- 5 237 147
- US-A- 5 622 637
- PATENT ABSTRACTS OF JAPAN vol. 2000, no. 08, 6. Oktober 2000 (2000-10-06) & JP 2000 141049 A (DAINICHI SEIKAN KK;KOREI SANGYO:KK), 23. Mai 2000 (2000-05-23)

## Beschreibung

Die Erfindung betrifft ein Verfahren gemäss Oberbegriff des Anspruchs 1. Ferner betrifft die Erfindung eine Schweissvorrichtung gemäss Oberbegriff des Anspruchs 9.

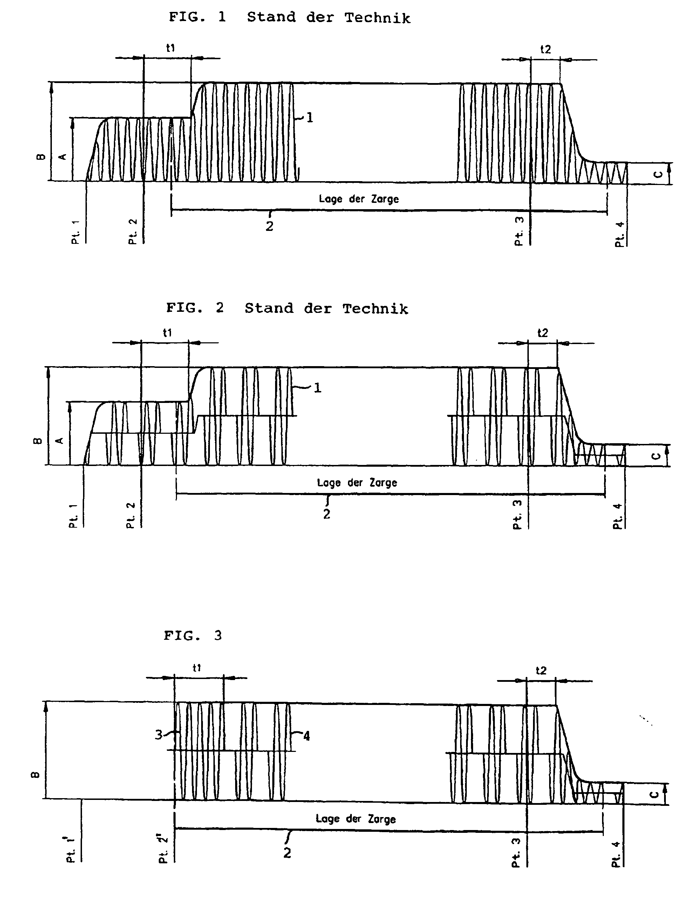

Es ist bekannt, Blechüberlappungen mit Schweissrollen insbesondere unter Zuhilfenahme von Drahtzwischenelektroden zu schweissen, so z.B. beim Zargenschweissen. Insbesondere bei der Einzelschweissung von Schweissgut, insbesondere Zargen, wobei jede Zarge einzeln auf die in Ruhelage befindlichen Schweissrollen trifft, was bei Handschweissmaschinen oder automatisch beschickten Schweissmaschinen der Fall sein kann, stellt sich das Problem der Schweissung des ersten Schweisspunktes am Zargenanfang bzw. am Anfang des Schweissgutes. Da in diesem Punkt die eingebrachte Schweissenergie bzw. die Schweisswärme sich in Nahtrichtung nur einseitig im Blech verteilen kann ergibt sich beim Sollschweissstrom für die Schweissung der Überlappungsnaht im ersten Punkt ein Verbrennen des Schweissgutes bzw. eine fehlerhafte Verschweissung. Es ist daher im Stand der Technik bekannt, den Schweissstrom anfänglich zu reduzieren, wobei so vorgegangen wird, wie dies im schematischen Zeit/Strom-Diagramm von Figur 1 dargestellt ist. Demgemäss wird bei der Schweissmaschine zu einem Zeitpunkt Pt. 1 die Schweisswechselspannung bzw. der Schweisswechselstrom und der Schweissrollen- bzw. Drahtantrieb aktiviert, wobei von der Schweissstromquelle ein reduzierter Schweissstrom mit dem Stromwert A, der geringer ist als der Strom-Sollwert B für die Überlappungsnaht, vorgegeben wird. Der Schweisswechselstrom 1 ist dabei z.B. ein 50 Hz Wechselstrom.

Zu einem Zeitpunkt Pt. 2 erreicht der Schweisswagen der Schweissmaschine, der das zu schweissende Schweissgut, z.B. eine Behälterzarge 2, trägt, eine vorbestimmte Position vor den Schweissrollen, worauf ein Zeitablauf t1 gestartet wird, an dessen Ende der Stromsollwert B von der Schweissstromquelle an den Drahtelektroden vorgegeben wird. Das Schweissgut bzw. die Zarge 2 erreicht die Drahtelektroden zu einem in bezug auf den Schweissstrom 1 zufälligen Zeitpunkt, z.B. wie gezeigt bei einem Maximum der Stromhalbwelle, und die Schweissung beginnt bei reduziertem Stromwert A und geht nach Ablauf der Zeit t1 zum Stromsollwert B über. Bekannt ist es weiter, den Stromwert gegen das Ende des Schweissgutes abzusenken, z.B. auf den Wert C, da das Schweissgutende bzw. Zargenende von einem Wärmevorlauf durch das Schweissgut bereits erhitzt ist. In Figur 1 ist dies durch den Zeitpunkt Pt. 3 gezeigt, an dem abhängig von der Wagenposition ein Zeitlauf t2 gestartet wird, der zum Schweissgutende hin eine Stromwertreduktion auf den Wert C hin bewirkt. Nach dem Durchlauf des Schweissgutes wird bei Punkt Pt. 4 die Rollen- bzw. Drahtbewegung der Maschine gestoppt und der Schweissstrom wird abgestellt. Figur 2 zeigt diesen bekannten Vorgang für den Fall, dass beschichtete Bleche, z.B. verzinkte, verbleite oder aluminisierte Bleche verschweisst werden sollen, bei denen aufgrund der Beschichtung höhere Schweissströme als bei unbeschichteten Blechen notwendig sind. Der höhere Schweissstrom als Dauerwechselstrom kann zu einem Verbrennen der Schweissnaht führen, weshalb es bekannt ist, den Schweissstrom nur paketweise zu aktivieren und zwischen den Paketen Pausen vorzusehen (sog. "stitch weld" Verfahren). Figur 2 zeigt dabei als Beispiel ein Strom-/Pausenverhältnis von 2:1. Ansonsten sind die Verhältnisse dieselben wie in Figur 1: Pt. 1 ist der Startpunkt für die Drahtbewegung und die Vorgabe des reduzierten Stroms A, Pt. 2 legt den Startpunkt für die Zeit t1 fest, wobei Pt. 2 von der Wagenposition ausgelöst wird, und am Ende von t1 wird der Stromsollwert B vorgegeben. Punkt Pt. 3 startet, ebenfalls abhängig von der Wagenposition, die Zeit t2, die die Reduktion des Stromes auf den Endwert C auslöst, und bei Punkt Pt. 4 wird die Maschine gestoppt. In der Regel wird bei der Reduktion auf den Stromwert C zu Dauerwechselstrom übergegangen, wie in Figur 2 dargestellt. Auch beim stitch weld-Verfahren ist nicht definiert, bei welchem Stromverlauf die vordere Kante des Schweissgutes auf die Schweissrollen bzw. die Drahtelektrode trifft. In Figur 2 ist gezeigt, dass dies zufällig beim Nulldurchgang des Schweissstromes erfolgt, es könnte aber irgendwo innerhalb eines Schweisstrompaketes oder einer Schweissstrompause erfolgen. Die Schweissung des ersten Schweisspunktes erfolgt damit im Stand der Technik zwar jedenfalls mit reduziertem Schweissstromwert A, die Schweissqualität des ersten Punktes kann aber variieren. Beim Auftreffen der Vorderkante des Schweissgutes auf die bereits stromführende und somit erhitzte Drahtzwischenelektrode kann ein Drahtbruch erfolgen, insbesondere wenn die Drahtzwischenelektrode in diesem Zeitpunkt mit einem Stromspitzenwert beaufschlagt ist (Figur 1). Besonders anfällig ist die Elektrode dabei beim Schweissen dicker Bleche von z.B. 0,5 bis 1,25 mm Dicke, bei denen das einfach überlappende Schweissgut die doppelte Dicke aufweist bzw. gefalztes, doppelt überlappendes Schweissgut die 4-fache Dicke. Aus EP-A-0 273 984 ist es bekannt, bei einem Verfahren der eingangs genannten Art einen Näherungsschalter zur Erfassung des Schweissgutes einzusetzen. Aus US A-3 584 178 ist es bekannt, dazu photoelektrische Zellen einzusetzen.

Der Erfindung liegt daher die Aufgabe zugrunde, ein Verfahren zum Schweissen von Blechüberlappungen, insbesondere bei dicken Blechen, zu schaffen, das die genannten Nachteile nicht aufweist.

Diese Aufgabe wird bei einem Verfahren der eingangs genannten Art mit den kennzeichnenden Merkmalen des Anspruchs 1 gelöst.

Dadurch, dass das Anlegen des Schweissstromes an die Elektroden gezielt erst dann erfolgt, wenn sich das Schweissgut zwischen den Schweisselektroden befindet, können die Nachteile vermieden werden. Es hat sich gezeigt, dass dadurch Schweissprobleme des ersten Punktes und auch Drahtbrüche nicht auftreten. Durch diese Massnahme ist es sogar möglich, auf die anfängliche Reduktion des Schweisstromwertes zu verzichten, so dass bevorzugterweise bereits ab Schweissbeginn mit dem Schweissstromsollwert geschweisst wird. Der Einschaltzeitpunkt wird dabei von der Auslenkung einer Schweissrollenelektrode, vorzugsweise der oberen Schweissrollenelektrode, abgeleitet. Dies gibt ein besonders sicher erfassbares Mass für die tatsächliche Position der Vorderkante des Schweissgutes zwischen den Elektroden.

Der Erfindung liegt weiter die Aufgabe zugrunde, eine Schweissvorrichtung zu schaffen, die die genannten Nachteile nicht aufweist.

Diese Aufgabe wird durch eine Schweissvorrichtung der eingangs genannten Art durch die kennzeichnenden Merkmale des Anspruchs 9 erreicht.

Im folgenden werden der Stand der Technik und Ausführungsbeispiele der Erfindung anhand der Figuren näher erläutert. Dabei zeigt
Figur 1 ein schematisches Diagramm des Schweissstromverlaufes in bezug auf die Lage eines Schweissgutes nach Stand der Technik;
Figur 2 ein Diagramm nach Stand der Technik gemäss Figur 1 mit stitch weld-Schweissstrom;
Figur 3 ein schematisches Diagramm des Schweissstromverlaufes gemäss einem Ausführungsbeispiel der Erfindung;
Figur 4 eine schematische Ansicht der Elektroden und Steuerung einer Schweissvorrichtung zur Erläuterung der Erfindung;
Figur 5 eine Teilansicht einer Schweissvorrichtung gemäss einem Ausführungsbeispiel der Erfindung; und
Figur 6 eine Draufsicht auf die Einstellscheibe für die Blechdicke.

Figur 1 zeigt den bereits beschriebenen Stromverlauf des Schweissstromes 1 beim Schweissen einer Zarge 2 nach Stand der Technik. Figur 2 zeigt den grundsätzlichen gleichen Stromverlauf im stitch weld-Verfahren, wie bereits in der Einleitung beschrieben.

Figur 3 zeigt nun in der selben Art von Darstellung den zeitlichen Verlauf des Schweissstromes 3, 4 über einer Zarge 2 als Schweissgut. Dabei wird im Zeitpunkt Pt. 1' der Antrieb der Rollenelektroden bzw. der Drahtelektroden gestartet, wie dies grundsätzlich bekannt ist und deshalb hier nicht weiter erläutert zu werden braucht. Die Elektroden bleiben aber spannungs- bzw. stromlos. Erst beim Punkt Pt. 2', wenn das Schweissgut bzw. die Zarge 2 bereits zwischen die Rollen- bzw. Drahtelektroden gelangt ist, wird die Schweissspannung bzw. der Schweissstrom an die Elektroden durchgeschaltet. Vorzugsweise erfolgt dies im Nulldurchgang, wie in Figur 3 gezeigt. Es hat sich überraschenderweise gezeigt, dass mit dieser Massnahme sogar auf die Stromabsenkung am Schweissgutanfang verzichtet werden kann, obschon eine solche natürlich ohne weiteres auch möglich ist. Bevorzugterweise wird aber wie in Figur 3 gezeigt von Anfang an mit dem Stromsollwert B geschweisst. Weiter ist es für eine qualitativ hochstehende Schweissung bevorzugt, wenn am Schweissgutanfang mit Dauerwechselstrom geschweisst wird, z.B. für einen Nahtlängenabschnitt von 5 bis 30 mm, insbesondere 10 bis 20 mm und insbesondere ca. 15 mm. Danach kann wie gezeigt zum stitch weld-Verfahren mit einzelnen Schweissstrompaketen 4 übergegangen werden, wie aus dem Stand der Technik bekannt. Es kann aber auch mit Dauerwechselstrom weitergeschweisst werden, wobei diese Wahl von der Blechart abhängt, wie dies bereits im Stand der Technik bekannt ist. Das Ende der Schweissung unterscheidet sich nicht vom Vorgehen nach Stand der Technik und es kann für die Punkte Pt. 3 und Pt. 4 bzw. für t2 auf das zum Stand der Technik Ausgeführte verwiesen werden.

Zur Durchführung des Verfahrens ist es wichtig, die Lage des Schweissgutes bzw. der Zarge so zu erfassen, dass das Anlegen des Schweissstromes aus der Schweissstromquelle dann erfolgt, wenn sich das in Schweissrichtung geförderte Schweissgut eben gerade zwischen den Elektroden befindet, so dass der erste Punkt mit dem dann angelegten Schweissstrom geschweisst werden kann. Der Einschaltzeitpunkt bzw. Zeitpunkt des Anlegens wird daher von der Position des Schweissgutes selber und nicht von dessen Fördereinrichtung zu den Schweissrollen abgeleitet, insbesondere von der Vorderkante des Schweissgutes. Der Einschaltzeitpunkt wird durch die Auslenkung der Schweissrollen, inbesondere der oberen Schweissrolle bei feststehender unteren Schweissrolle, abgeleitet. Die Auslenkung der Schweissrolle gibt direkt eine Anzeige der gewünschten Schweissgutlage zwischen den Schweissrollen, die an die Steuereinrichtung der Schweissvorrichtung abgegeben werden kann und durch diese das Anlegen des Schweissstromes an die Elektroden bewirken kann.

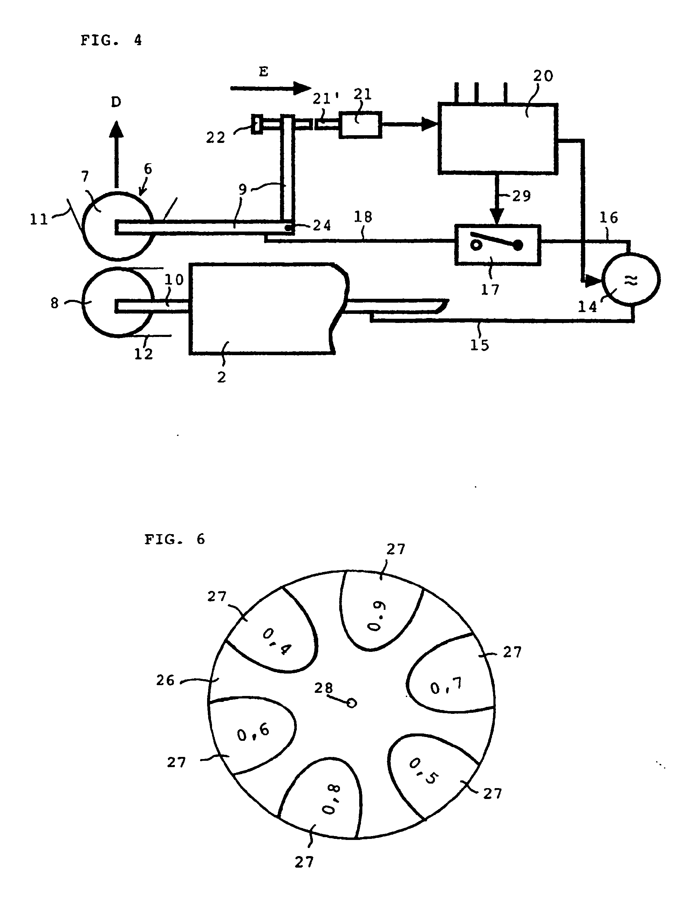

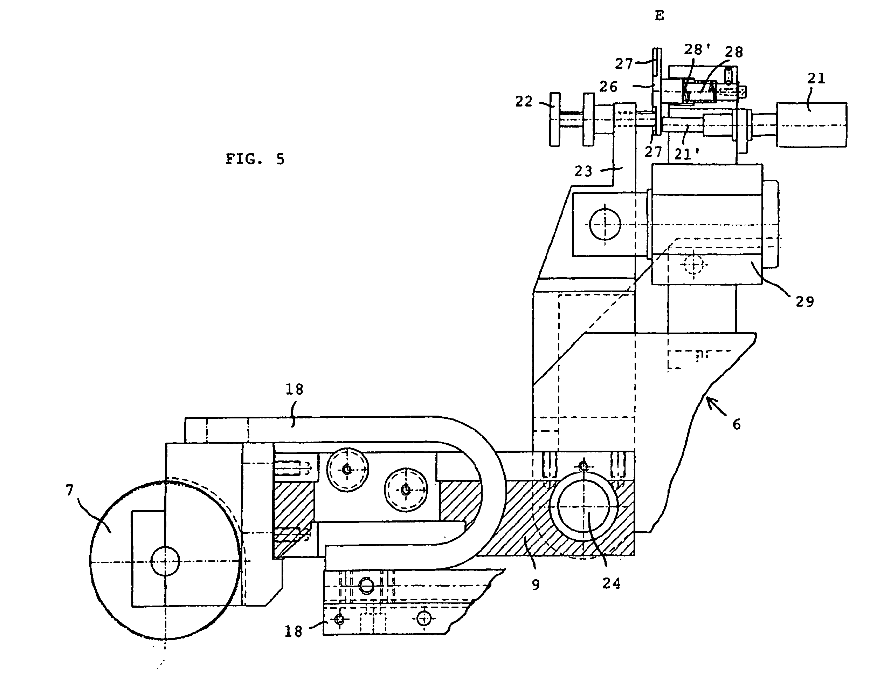

Figur 4 zeigt eine schematische Ansicht einer Schweissvorrichtung 6 zur Erläuterung dieses Vorgehens und Figur 5 zeigt eine entsprechende Detailansicht eines Teils der Schweissvorrichtung. In Figur 4 ist eine Schweissvorrichtung 6 mit einer unteren Schweissrollen-Elektrode 8 und einer oberen Schweissrollenelektrode 7 gezeigt, welche zur Schweissung von einem Schweissgut 2 dient, welches durch eine nicht gezeigte Fördereinrichtung, z.B. einen Schweisswagen, zwischen den Schweissrollen 7, 8 hindurchgefördert wird.

Die untere Schweissrolle 8 ist dabei auf bekannte Weise an einem Schweissarm 10 angeordnet, welcher vom Schweissgut 2 umgeben wird. An der unteren Schweissrolle 8 ist bevorzugterweise eine Drahtzwischenelektrode 12 vorgesehen, welche auf bekannte Weise in der Schweissmaschine geführt wird und eine sich ständig erneuernde Schweisselektrode bildet. Dies gilt ebenso für die obere Schweissrolle 7, welche mit der Drahtzwischenelektrode 11 versehen ist, welche wie die untere Drahtzwischenelektrode 12 nur zu einem kleinen Teil gezeigt ist. Die obere Schweissrolle 7 ist an einem schwenkbaren Oberarm 9 angeordnet, welcher um die Drehachse 24 schwenkbar ist. Die untere Schweissrolle 8 bzw. der Schweissarm 10 ist in der Regel starr angeordnet und der obere Schweissarm 9 mit der Rolle 7 kann durch eine Betätigungseinrichtung 29 (Figur 5) zur Aufbringung der notwendigen Schweisskraft gegen die untere Schweissrolle 8 gepresst werden. Die Betätigungseinrichtung erlaubt dabei ein federndes nach oben schwenken in Richtung des Pfeiles D beim Einführen des Schweissgutes 2 zwischen die Schweissrollen. Vorzugsweise wird nun diese Auslenkung der oberen Schweissrolle erfasst, um ein Signal zu gewinnen, welches anzeigt, dass sich das Schweissgut 2 zwischen den Schweissrollen 7 und 8 befindet. In Figur 4 ist dazu ein elektrischer Schalter 21 dargestellt, dessen Betätigungselement 21' von einem einstellbar am oberen Teil des Schweissarmes befestigten Betätigungsglied 22 betätigt wird, wenn sich die Schweissrolle in Richtung D nach oben verschiebt bzw. sich das obere Ende des Schweissarmes 9 in Pfeilrichtung E bewegt. Das Betätigungsglied 22 ist dabei justierbar am oberen Ende des Armes 9 angeordnet, um das Betätigungselement 21 erst ab einer vorbestimmten Auslenkung, welche von der Dicke der Überlappung, oder der eigentlichen Blechdicke des Schweissgutes 2 abhängig ist, zu betätigen. Wird durch die Betätigung des Schalters 21 durch die Auslenkung der oberen Schweissrolle ein Signal an die Steuereinrichtung 20 abgegeben, so gibt diese wiederum über den Signalpfad 29 ein Aktivierungssignal an das Schaltelement 17 ab, welches den Schweissstrom aus einer Schweissstromquelle 14 über die Leitungen 15, 16 und 18 an die Schweisselektroden anlegt. Die Schweissstromquelle 14 ist dabei bevorzugterweise zur Einstellung der Schweissstromamplitude B und zur Einstellung der Schweissstromfrequenz durch die Steuereinrichtung 20 steuerbar. Das Schaltelement 17 ist vorzugsweise ein solches Element, welches den Schweissstrom bzw. die Schweissspannung erst bei einem Nulldurchgang durchschaltet. Solche Schalter sind in der Elektronik wohlbekannt und werden hier nicht weiter erläutert. Auf die gezeigte Weise kann der Schweissstromverlauf gemäss dem Verfahren so erzeugt werden, dass der Schweissstrom erst dann an die Schweisselektroden angelegt wird, wenn sich das Schweissgut bereits zwischen den Schweisselektroden befindet.

Figur 5 zeigt eine genauere Darstellung des oberen Teiles der Schweissmaschine mit der oberen Schweissrolle 7 und dem Schweissarm 9, welcher um eine am Maschinengestell feste Drehachse 24 schwenken kann. Die Stromzuführung zur oberen Schweissrolle erfolgt über eine Stromschiene 18. Das Betätigungsglied 29 dient zum federnden Andrücken der oberen Schweissrolle 7 an das Schweissgut bzw. zum Wegschwenken der Rolle 7 zur Beladung der Schweissmaschine mit dem Schweissgut. Am Maschinengestell befestigt ist weiterhin der Schalter 21 mit seinem Betätigungselement 21'. Am oberen Ende 23 des Schweissarmes 9 ist wiederum das Justierglied 22 dargestellt, mit welchem eine Grundeinstellung für die Betätigung des Schalters 21 bei Auslenkung der Schweissrolle 7 nach oben eingestellt werden kann. Zur Anpassung an verschiedene Blechdicken von verschiedenem Schweissgut ist nun weiter ein Einstellglied 26 vorgesehen, welches sich zwischen das Justiermittel 22 und das Betätigungselement 21' des Schalters 21 einschiebt. Das Einstellglied 26 ist dabei bevorzugterweise eine Scheibe, welche verschieden dicke Bereiche aufweist, welche je nach Blechdicke zwischen das Justierelement 22 und das Betätigungselement 21' eingeführt werden können. Es kann sich z.B. um eine drehbare Scheibe 26 handeln, welche verschieden tief eingefräste Taschen 27 aufweist, bei denen jeweils die Restdicke der Scheibe, die zwischen die Teile 22 und 21' zu liegen kommt, angepasst an vorgegebene Blechdicken verschieden dick ist. Figur 6 zeigt eine entsprechende runde Scheibe 26 mit sechs verschiedenen Taschen 27, die jeweils mit der entsprechenden einfachen Blechdicke beschriftet sind. Die Scheibe 26 ist um eine Achse 28 drehbar am Maschinengestell gelagert, so dass durch einfaches Drehen der Scheibe jeweils eine der Taschen 27 zwischen die Teile 22 und 21' in Eingriff gebracht werden kann, wobei die Restdicke der Scheibe in diesem Bereich direkt die Auslenkung der Schweissrolle 7 bestimmt, bei welcher dadurch der Schalter 21 betätigt wird. Die Bedienungsperson der Schweissmaschine muss also lediglich die Scheibe 26 entgegen der um die Drehachse 28 herum angeordneten Feder 28' in Richtung des Pfeiles E drücken, um die Scheibe 26 drehen zu können und die Scheibe so drehen, dass die Tasche mit der angegebenen Blechdicke zwischen die Teile 22 und 21' eingreift. Danach wird die Scheibe 26 durch die Feder 28' wieder nach vorne zum Element 22 hin gedrückt und auch das Element 21' bewegt sich, durch die Feder des Schalters 21 nach vorne gedrückt, zurück in die in Figur 5 dargestellte Position. Auf diese Weise kann auf einfache Art eine Anpassung an die jeweilige Blechdicke des Schweissgutes erfolgen.

## Patentansprüche

1. Verfahren zum Schweissen eines überlappenden Schweissgutes (2) aus Blech auf einer Schweissvorrichtung (6) mit Schweissrollenelektroden (7, 8) und gegebenenfalls zusätzlichen Drahtzwischenelektroden (11, 12), bei dem der Schweissstrom (3) erst bei zwischen den Elektroden befindlichem Schweissgut an die Elektroden angelegt und der Einschaltzeitpunkt (Pt. 2') des Schweissstromes (3) von der in Schweissrichtung vorderen Kante des Schweissgutes abgeleitet wird, **dadurch gekennzeichnet, dass** der Einschaltzeitpunkt von der vorderen Kante abgeleitet wird, indem die Auslenkung mindestens einer der Schweissrollenelektroden (7, 8) beim Einschieben des Schweissgutes zwischen die Schweissrollenelektroden erfasst wird.

2. Verfahren nach Anspruch 1, **dadurch gekennzeichnet, dass** der Schweissstrom beim nächsten Nulldurchgang desselben nach einer vorbestimmten, einstellbaren Auslenkung der Schweissrollenelektroden an diese angelegt wird.

3. Verfahren nach einem der Ansprüche 1 oder 2, **dadurch gekennzeichnet, dass** zum Einschaltzeitpunkt der Schweissstromsollwert (B) für die Überlappungsnaht an den Schweissrollenelektroden bzw. Drahtzwischenelektroden vorgegeben wird.

4. Verfahren nach einem der Ansprüche 1 bis 3, **dadurch gekennzeichnet, dass** zum Einschaltzeitpunkt ein gegenüber dem Schweissstromsollwert (B) für die Überlappungsnaht reduzierter Schweissstromsollwert (A) an den Schweissrollenelektroden bzw. Drahtzwischenelektroden vorgegeben wird und nach einer vorgegebenen Zeit der Stromsollwert (B) vorgegeben wird.

5. Verfahren nach einem der Ansprüche 1 bis 4, **dadurch gekennzeichnet, dass** der Schweissstrom zum Einschaltzeitpunkt als Dauerwechselstrom und nach einer vorbestimmten Zeit als durch Pausen unterbrochener Wechselstrom an die Schweissrollenelektroden bzw. Drahtzwischenelektroden angelegt wird.

6. Verfahren nach einem der Ansprüche 1 bis 5, **dadurch gekennzeichnet, dass** das Schweissgut von Behälterzargen (2) gebildet wird.

7. Verfahren nach einem der Ansprüche 1 bis 6, **dadurch gekennzeichnet, dass** das Schweissgut (2) eine einfache oder eine doppelte Überlappung (30, 31) aufweist.

8. Verfahren nach einem der Ansprüche 1 bis 7, **dadurch gekennzeichnet, dass** die einfache Blechdicke des Schweissgutes 0,4 mm bis 1,25 mm beträgt, und dass das Schweissgut insbesondere beschichtete Bleche umfasst.

9. Schweissvorrichtung mit Schweissrollenelektroden (7, 8), und gegebenenfalls zusätzlichen Drahtzwischenelektroden (11,12), einer über eine steuerbare Schaltanordnung (17) mit den Elektroden in Verbindung bringbaren Schweissstromquelle (14), insbesondere einer Wechselstromschweissstromquelle, sowie einer Steuereinrichtung (20) für die Schaltanordnung, **gekennzeichnet durch,** ein mit der Steuereinrichtung in Verbindung stehendes Mittel (21), das auf die Lage der in Schweissrichtung gesehen vorderen Kante eines Schweissgutes in bezug auf die Schweissrollenelektroden anspricht, wobei das Mittel zur Erfassung der Auslenkung mindestens einer der Schweissrollenelektroden (7) **durch** das zwischen die Elektroden gelangende Schweissgut (2) ausgestaltet ist, und wobei die Steuereinrichtung (20) zur Entgegennahme eines die Kante des Schweissgutes in bezug auf die Rollenelektroden angebenden Signals aus dem Mittel (21) und in Abhängigkeit davon zur Abgabe eines den Schweissstrom an die Rollenelektroden bzw. die Drahtzwischenelektroden freigebenden Signals (29) an die Schaltanordnung (17) ausgestaltet ist.

10. Schweissvorrichtung nach Anspruch 9, **dadurch gekennzeichnet, dass** das Mittel zur Erfassung der Auslenkung eine Einstellanordnung (22, 26, 27, 28) umfasst, durch welche das Ansprechen auf die Lage der Vorderkante des Schweissgutes an die Blechdicke anpassbar ist.

11. Schweissvorrichtung nach Anspruch 10, **dadurch gekennzeichnet, dass** die Einstellanordnung eine Scheibe (26) mit mehreren Bereichen (27) unterschiedlicher, zur Blechdicke des Schweissgutes in einem vorbestimmten Verhältnis stehender Dicke aufweist.

12. Schweissvorrichtung nach Anspruch 11, **dadurch gekennzeichnet, dass** die Scheibe (26) drehbar angeordnet ist, wobei die Bereiche (27) verschieden tiefe Ausnehmungen in der Scheibe sind, die vorzugsweise mit der jeweiligen Blechdicke des Schweissgutes beschriftet sind.

## Claims

1. Method for welding an overlapping article (2) of sheet metal on a welding apparatus (6) with welding electrode rollers (7, 8), and as the case may be additional intermediate wire electrodes (11, 12), in which a welding current (3) is not applied to the electrodes, until the article to be welded is situated between the electrodes and the moment of switching on (Pt. 2') of the welding current (3) is derived from the forward edge in welding direction of the article to be welded, **characterised in that** the moment of switching on is derived from the forward edge by detection of the deflection of at least one of the welding electrode rollers (7, 8) upon insertion of the article to be welded between the electrode rollers.

2. Method according to claim 1, **characterised in that** the welding current is applied to the electrode rollers upon the next passage through zero of said current after a predetermined, adjustable deflection of the electrode rollers.

3. Method according to one of claims 1 or 2, **characterised in that** at the moment of switching on the rated welding current value (B) for the lap joint seam is impressed on the welding electrode rollers or on the intermediate wire electrodes, respectively.

4. Method according to one of claims 1 to 3, **characterised in that** at the moment of switching on a reduced rated welding current value (A) that is reduced in comparison to the rated welding current value (B) for the lap joint seam is impressed on the welding electrode rollers or on the intermediate wire electrodes, respectively, and that after a predetermined time period the rated welding current value (B) is impressed.

5. Method according to one of claims 1 to 4, **characterised in that** at the moment of switching on the welding current is applied to the welding electrode rollers or to the intermediate wire electrodes, respectively, as a continuous alternating current, and after a predetermined time period as an alternating current interrupted by breaks.

6. Method according to one of claims 1 to 5, **characterised in that** the articles to be welded are container bodies (2).

7. Method according to one of claims 1 to 6, **characterised in that** the article to be welded (2) has a single or a double overlap (30, 31).

8. Method according to one of claims 1 to 7, **characterised in that** a single sheet thickness of the article to be welded is 0.4 mm up to 1.25 mm, and that the article to be welded includes in particular coated sheets.

9. Welding apparatus with welding electrode rollers (7, 8), and as the case may be additional intermediate wire electrodes (11, 12), a welding current source (14), in particular an AC welding current source, that is connectable to the electrodes by a controllable switch arrangement (17), as well as a control device (20) for the switch arrangement, **characterised by** a means (21) connected to the control device, which responds to the position of the forward edge of an article to be welded seen in welding direction in relation to the welding electrode rollers, wherein the means is adapted for detecting the deflection of at least one of the welding electrode rollers (7), caused by the article to be welded (2) passing between the electrodes, and wherein the control device (20) is adapted for receiving a signal from the means (21) indicating the edge of the article to be welded with regard to the welding electrode rollers and to deliver dependently therefrom a signal (29) to the switch arrangement (17) releasing the welding current on the electrode rollers or on the intermediate wire electrodes, respectively.

10. Welding apparatus according to claim 9, **characterised in that** the means for detecting the deflection comprise a setting arrangement (22, 26, 27, 28) by which the response to the position of the forward edge of the article to be welded is adaptable to the thickness of the sheet metal.

11. Welding apparatus according to claim 10, **characterised in that** the setting arrangement comprises a disk (26) with a plurality of regions (27) of different thickness which each stand in a predetermined proportion to the thickness of the article to be welded.

12. Welding apparatus according to claim 11, **characterised in that** the disk (26) is rotatably arranged, whereas the regions (27) are recesses of different depth in the disk, which recesses are preferably marked with the corresponding thickness of the article to be welded.

## Revendications

1. Procédé pour souder un objet (2) en tôle à souder par recouvrement sur un dispositif de soudage (6) muni d'électrodes de soudage à rouleau (7, 8) et éventuellement d'électrodes intermédiaires métalliques (11, 12) supplémentaires, dans lequel le courant de soudage (3) est seulement appliqué aux électrodes quand l'objet à souder se trouve entre les électrodes et le moment de mise en marche (Pt. 2') du courant de soudage (3) est dérivé du bord avant en direction de soudage de l'objet à souder, **caractérisé en ce que** le moment de la mise en marche est dérivé du bord avant du fait que la présence d'au moins une des électrodes de soudage à rouleau (7, 8) est détectée quand l'objet à souder est inséré entre les électrodes de soudage à rouleau.

2. Procédé selon la revendication 1, **caractérisé en ce que** le courant de soudage est appliqué aux électrodes de soudage à rouleau à son passage suivant au point zéro après un déploiement prédéfini et réglable des électrodes de soudage à rouleau.

3. Procédé selon l'une des revendications 1 ou 2, **caractérisé en ce qu'**au moment de la mise en marche la valeur de consigne du courant de soudage (B) pour le cordon de recouvrement est prédéfinie sur les électrodes de soudage à rouleau ou sur les électrodes intermédiaires métalliques.

4. Procédé selon l'une des revendications 1 à 3, **caractérisé en ce qu'**au moment de la mise en marche une valeur de consigne du courant de soudage (A), réduite par rapport à la valeur de consigne du courant de soudage (B) pour le cordon de recouvrement, est prédéfinie sur les électrodes de soudage à rouleau ou sur les électrodes intermédiaires métalliques et la valeur prescrite du courant (B) est prédéfinie après une durée prédéfinie.

5. Procédé selon l'une des revendications 1 à 4, **caractérisé en ce que**, au moment de la mise en marche, le courant de soudage est appliqué aux électrodes de soudage à rouleau ou aux électrodes intermédiaires métalliques comme courant alternatif permanent et après une durée prédéfinie comme courant alternatif interrompu par des pauses.

6. Procédé selon l'une des revendications 1 à 5, **caractérisé en ce que** l'objet à souder est formé par des châssis (2) de récipient.

7. Procédé selon l'une des revendications 1 à 6, **caractérisé en ce que** l'objet à souder (2) comporte un recouvrement (30, 31) simple ou double.

8. Procédé selon l'une des revendications 1 à 7, **caractérisé en ce que** la simple épaisseur de l'objet à souder est de 0,4 mm à 1,25 mm et que l'objet à souder comprend en particulier des tôles revêtues.

9. Dispositif de soudage comportant des électrodes de soudage à rouleau (7, 8) et éventuellement des électrodes intermédiaires métalliques (11, 12) supplémentaires, une source de courant de soudage (14), en particulier une source de courant alternatif de soudage, qui peut être mise en liaison avec les électrodes par l'intermédiaire d'un circuit (17) réglable, ainsi qu'un dispositif de commande (20) pour le circuit,
**caractérisé par** un moyen (21) qui est relié au dispositif de commande et réagit à la position du bord avant (quand on regarde en direction de soudage) d'un objet à souder par rapport aux électrodes de soudage à rouleau, le moyen étant conçu pour détecter la présence d'au moins une des électrodes de soudage à rouleau (7) à travers l'objet à souder (2) qui parvient entre les électrodes et le dispositif de commande (20) étant conçu pour recevoir un signal qui provient du moyen (21) et qui indique le bord de l'objet à souder par rapport aux électrodes de soudage à rouleau et en fonction de cela pour délivrer un signal (29) qui libère le courant de soudage sur les électrodes de soudage à rouleau ou sur les électrodes intermédiaires métalliques.

10. Dispositif de soudage selon la revendication 9, **caractérisé en ce que** le moyen pour détecter la présence comporte un système de réglage (22, 26, 27, 28) grâce auquel la réaction à la position du bord avant de l'objet à souder peut être adaptée à l'épaisseur de la tôle.

11. Dispositif de soudage selon la revendication 10, **caractérisé en ce que** le système de réglage comporte un disque (26) à plusieurs zones (27) d'épaisseurs différentes en rapport prédéfini avec l'épaisseur de tôle de l'objet à souder.

12. Dispositif de soudage selon la revendication 11, **caractérisé en ce que** le disque (26) est disposé de façon à pouvoir tourner, les zones (27) sont des cavités de profondeurs différentes dans le disque et portent de préférence des inscriptions qui indiquent l'épaisseur de tôle correspondante de l'objet à souder.
